Europäisches Patentamt

European Patent Office

Office européen des brevets

(11) Publication number: **0 665 426 A1**

(12) **EUROPEAN PATENT APPLICATION**

(21) Application number: **95100319.3**

(22) Date of filing: **11.01.95**

(51) Int. Cl.6: **G01N 22/00**

(30) Priority: **27.01.94 RU 94003307**

(43) Date of publication of application:
**02.08.95 Bulletin 95/31**

(84) Designated Contracting States:
**CH DE FR GB IT LI**

(71) Applicant: **Vragov, K.M.**
**ul Granovskogo, 4,**
**Office 13**
**103009, Moscow (SU)**

(72) Inventor: **Vaganov, Alexander Borisovich**

ulitsa 26 Bakinskih comissarov,
**Build. 6,**
**Suite 91**
**117526, Moscow (RU)**
Inventor: **Frantsesson, Andrey Vladimirovich**
**Balkalskaya Ulitsa, Build. 23, Suite 129**
**107207, Moscow (RU)**

(74) Representative: **Gritschneder, Martin,**
**Dipl.-Phys.**
**Patentanwälte Abitz & Partner**
**Postfach 86 01 09**
**D-81628 München (DE)**

(54) **Method and device for measuring properties of anisotropic dielectric materials.**

(57) To measure properties of a dielectric material (25), the latter is put into a cavity microwave resonator (1) , and two resonant oscillation modes ($E_{110}$,$E_{011}$) are excited with mutually orthogonal electric fields. Initial frequency difference for the excited modes is chosen so as to exclude any possibility of occurrence of some coupling therebetween. A function of ratio and(or) sum of frequency shifts of the resonant modes in the resonator is measured, these shifts being due to mode interaction with the material tested. The measured value of the ratio function determines anisotropy degree for the dielectric constant of the material tested while the measured value of the sum function determines the material's linear density.

Fig.1.

The invention relates in general to technique for measuring the properties of anisotropic dielectric materials such as intermediate products of the cotton manufacture (e.g., sliver and roving), paper, wood, or the like, fiber orientation of which causes a difference in the dielectric constant between different orientations. More particularly the invention concerns measuring of the anisotropy degree and linear density of said materials and can be used for control of these properties in a process.

A known method of measuring the properties of anisotropic dielectric materials consists in exposing a moving material to electric fields one of which is normal to the axis of the sample and the other is along the axis ( see USSR Certificate of authorship No.1458837 dated September 4, 1986, G01 R27/26). The fields are created with radial and axial capacitors. The anisotropy degree is determined by the difference and(or) ratio between the capacitor capacitances. The device to realize this method comprises a radial and axial capacitors, the electrodes thereof being made as partial rings. The material tested is moving through the capacitors with the electrodes connected to a capacitance measuring instrument (USSR Certificate of authorship No.1458837 dated September 4, 1986, G01 R27/26).

The disadvantages of these known method and device are in that the use of the capacitors means operation essentially with relatively low frequencies, i.e. a quasi-static case of the electrodynamics. Hence it is not possible to provide two independent electric fields normal to each other in the same space area. Therefore, the capacitors have to be spaced from one another along the material tested and so they measure different areas causing an additional measurement error Moreover, this known method is not suitable for measuring the linear density of the anisotropic materials.

From the known technical solutions which are most similar to our invention is the following measurement method for properties of anisotropic dielectric materials disclosed in EP 0372992 dated December 9, 1988, G01 N22/00. According to this known method, the material tested is put into a cavity microwave resonator, and two identical resonant oscillation modes are excited with the same frequency and mutually orthogonal electric fields. Because of an interaction of the material with the electric fields of the resonant modes, their frequencies are shifted differently. The material tested is located so that the property measured has a maximum effect on one of the modes whereas the other mode changes insignificantly. Difference in frequencies of the oscillation modes is measured and used to determine the linear density of the material tested. If the property measured influences both modes, e.g., as in the case of a sheet or film that is located in the fields of both modes, the frequency difference can be used to make a conclusion about anisotropy of the property in the sample plain.

The device for realization of this method (EP 0372992 dated December 9, 1988, G01 N22/00) comprises a measuring cell made as a cavity microwave resonator with a possibility to excite two mutually orthogonal oscillation modes, a coupler that is able to transfer the signals of the oscillation modes of the resonator and connected to the output thereof, a block for generation a function of frequency shift in the resonant oscillation modes made as a mixer with the input connected to the output of the coupler, and a recording device with its input connected to the output of the mixer.

A disadvantage of this known technical solution is a relatively high measurement error due to the known effect of "pulling" for two oscillation sources with near frequencies. As a result of the pulling, the signal of each mode has a component due to other mode. Also, high measurement error would occur where this technical solution is used to measure the linear density of the materials with large anisotropy degree of the dielectric constant, since the frequency difference between the resonant modes is function of both material linear density and anisotropy of its dielectric constant.

The present invention provides an improvement in accuracy of measuring properties of dielectric anisotropic materials such as anisotropy degree of the dielectric constant and its related properties as well as linear density.

Contrary to the known method, in the method of the present invention the resonant modes are excited in the resonator with different frequencies which are chosen to exclude a possibility of coupling therebetween, and the ratio function and(or) sum function are measured as a shift function for the resonant modes' frequency shifts due to interactions between the electric fields of the modes and material tested. Ratios $f_1/f_2$,$(1-f_1/f_2)$, or $(1-k \cdot f_2/f_1)/(1+k \cdot f_2/f_1)$ can be measured as the ratio single-valued function for the frequency shifts, where $f_1$ and $f_2$ are the frequency shifts for the first and second resonant modes in the resonator, respectively, and k is the coefficient depending on relative filling of the electric fields of the resonant oscillation modes used with the material tested. The value of $(f_1/k+f_2)$ is measured as the sum single-valued function for the frequency shifts of the resonant oscillation modes. The measured value of the ratio function determines anisotropy degree for the dielectric constant of the material tested while the measured value of the sum function determines the material's linear density.

The use of two resonant oscillation modes with mutually orthogonal electric fields excited in the resonator at different frequencies provides determination of both anisotropy degree and linear density of the material tested with high accuracy. This results from the fact that the signal of the frequency shift for each mode contains no component of the signal of other mode. Further, each signal is in proportion only to the material's dielectric constant along corresponding axis and to its density for a given area. Therefore, the ratio of the two signals characterizes anisotropy of material's dielectric constant only and does not depend on its linear density. As mentioned above, in the materials with which the present invention is concerned the anisotropy is due to the fiber orientation. For these materials, whenever fiber orientation changes, an increase in the frequency shift for the resonant oscillation mode with the electric field directed along an axis automatically results in a decrease in the frequency shift for the resonant oscillation mode with the electric field directed along the orthogonal axis. To a linear approximation, the sum of the frequency shifts varies in proportion to linear density and does not depend on anisotropy if values of $f_1$ and $f_2$ are identical for the isotropic material. These values can differ in actual practice since the sample of the material tested occupies different areas of the electric fields for different oscillation modes in the resonator. The k coefficient allows for these differences. The value of k is chosen to satisfy the condition that $f_1/k = f_2$ for the isotropic material.

Contrary to the known device, the cavity microwave resonator of the present invention allows to excite each resonant oscillation mode with a frequency that differs from the frequency of other mode, with a dual-channel frequency converter connecting the output of the coupler and input of the block of function generation.

Using known filtration means, the components of the $f_1$ and $f_2$ signals or combinations thereof which are required to generate the above functions are isolated in the dual-channel frequency converter.

The present invention is explained in Figures 1 to 8. Figure 1 shows a cavity dual-mode microwave resonator with a sample of the material tested. Figures 2 to 8 are block diagrams of a device according to the present invention. Figure 9 shows a curve indicating in relative units the outputs of a device mock-up corresponding to the present invention as a function of fiber relative parallelisation coefficient, the latter characterizing anisotropy of the intermediate products of the cotton manufacture. Figure 10 gives an example of using the invention for measuring the linear density of the intermediate products.

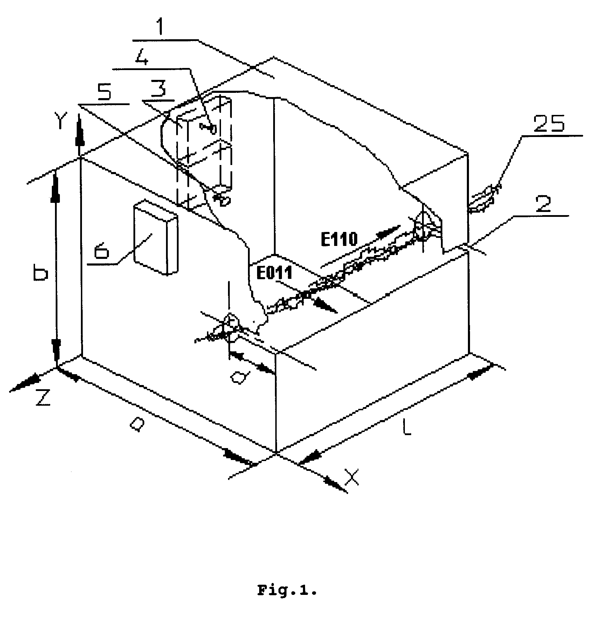

A rectangular resonator 1 with $E_{110}$ resonant oscillation mode on $F_1$ frequency and $E_{011}$ mode on $F_2$ frequency can be used as a microwave resonator (Fig.1). Electric field directions for these modes are shown by arrows. The rectangular resonator is preferable from construction considerations, although other resonator types can be used such as cylindrical resonator with $E_{010}$ and $H_{111}$ oscillation modes. These resonators are designed by known equations. (See, for example, L.A.Vainshtein. Electromagnetic waves. Second edition, revised and enlarged. Moscow, "Radio i svyaz," pp.328-336, 1988.)

A slot 2 is provided to accommodate the material tested in the resonator. Slot 2 can be located in such a way that the $f_1$ and $f_2$ frequency shifts are identical for the isotropic material, i.e., k = 1. Slot location is determined by calculation of the ratio of frequency shifts for a sample of the isotropic material that is put in a certain place within the microwave resonator. The resonant oscillation modes with known distribution of the fields are excited in the resonator. Using known electrodynamics equations for the material with dielectric constant defined as $\epsilon = 1 + \alpha$, it is possible to find the f shift of F frequency for a particular oscillation mode by the following equation:

$$\frac{f}{F} = \frac{\alpha \int\limits_{V_1} E^2(r)dV}{\int\limits_{V} E^2(r)dV},$$

where E(r) - electric field of the resonant oscillation mode for the resonator's point defined by the r radius-vector; $V_1$ - sample volume; V - resonator volume.

Then, for a device according to the present invention and excitation of two resonant modes on $F_1$ and $F_2$ frequencies, the $f_1/f_2$ ratio is:

$$\frac{f_1}{f_2} = \frac{\displaystyle\int_{V_1} E_1^2(r)dV}{\displaystyle\int_{V_1} E_2^2(r)dV} \cdot \frac{F_2}{F_1}$$

For known distribution of electric fields with resonant oscillation modes, it is possible to choose a location of the sample of the material tested such that the ratio equals one. In this case, the $(f_1 + f_2)$ function can be used to measure the linear density.

In a resonator, two resonant oscillation modes can be excited on different frequencies by several known ways. The simplest way is to choose appropriate dimensions of the rectangular resonator. The frequency of the $E_{110}$ mode does not depend on the resonator dimension along Z axis whereas the frequency of the $E_{011}$ mode does not depend on the resonator dimension along X axis. This makes it possible to use the dimensions along the above axes to provide a resonance on different frequencies. For example, the resonator cavity has the following dimensions: a = 100 mm (along X axis), b = 100 mm (along Y axis), and l = 103 mm (along Z axis); then the frequency of $E_{110}$ mode is 2.121 GHz and that of $E_{011}$ is 2.090 GHz.

To get $f_1/f_2 = 1$ in this case, the slot is located as follows. For example, the cross-section area of the test material sample is represented by dimensions w along X axis and h along Y axis. The sample occupies the whole resonator along Z axis, i.e., its length is l. Then for $E_{110}$ mode:

$$E(z) = \sin\left(\frac{\pi \cdot x}{a}\right) \cdot \sin\left(\frac{\pi \cdot y}{b}\right)$$

and for $E_{011}$ mode:

$$E(x) = \sin\left(\frac{\pi \cdot y}{b}\right) \cdot \sin\left(\frac{\pi \cdot z}{l}\right).$$

In this case

$$\frac{f_1}{f_2} = \frac{F_2}{F_1} \cdot \left[1 - \frac{a}{\pi \cdot w} \cdot \sin\left(\frac{\pi \cdot w}{a}\right) \cdot \cos\left(\frac{2\pi \cdot w}{a}\right)\right],$$

where d is the coordinate of the sample's cross section center along X axis. For known values of $F_1$, $F_2$, a, w, and $f_1/f_2 = 1$, a value of d can be calculated and used to make the appropriate slot in the resonator. For the above numerical values, d is 74.75 mm and varies little with w.

If the sample is moving through the center of appropriate side of the resonator, or d = a/2, then k = 2.

The exact value of the k coefficient is determined during calibration of the instrument. As was indicated earlier, the $f_1$ and $f_2$ values are in proportion to the linear density for a given anisotropy degree. An isotropic material is used for calibration, whose electrical properties being similar to those for the material tested. In this case $k = f_1/f_2$.

The frequencies of the modes to be excited should be chosen as close as possible although they should be spaced enough to exclude any coupling effect therebetween. The coupling can occur due to both construction features of the resonator and degeneration of one mode into other because of interaction thereof with the material tested. The second reason results generally in more pronounced coupling. Therefore measuring of the responses of each resonant oscillation mode to the influence of the material tested is essentially sufficient for determination of adequate frequency spacing for the modes chosen. To excite appropriate resonant oscillation modes, the resonator is connected to two amplifiers 3 through coupling elements 4 and 5 made as loops or tuning posts located according to electric field distribution for the excited resonant oscillation modes.

The resonator outputs are made with coupler 6. This device can be fabricated as two loop elements, one element per each resonant oscillation mode with consideration for electric field distributions. Also, the coupler 6 can be made as a single element, e.g., as a loop oriented so that it encompasses the magnetic field lines for both oscillation modes. Further, the coupler can be made as two elements, one of which is tuned to transmit signals of both modes whereas other is tuned to transmit only signals of one of the modes. Separation of the signals is carried out during their subsequent processing. The coupling elements are tuned to transmit the signals of appropriate mode using known microwave techniques such as choice of coupling element (post or loop), or choice of coupling element location with consideration for electric field distribution of given resonant oscillation mode, or choice of coupling element orientation relative to the fields.

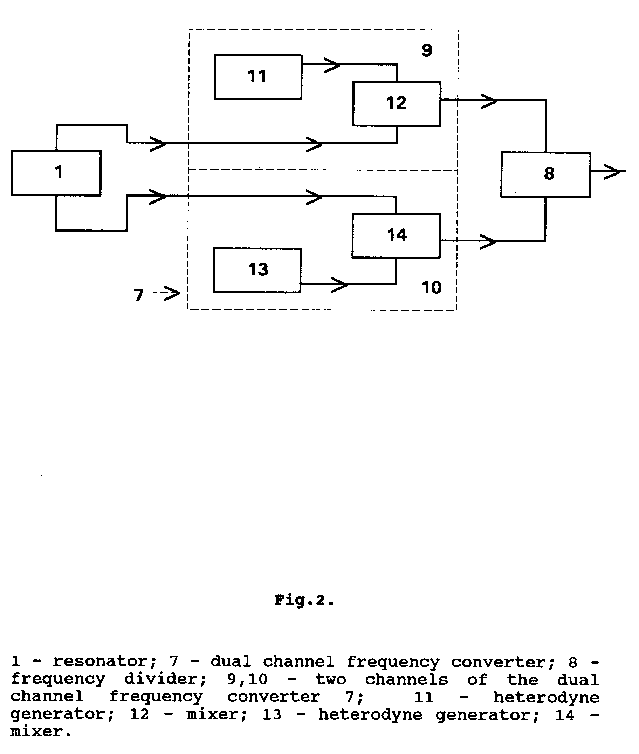

One embodiment of the present device shown in Fig.2 is designed to measure anisotropy degree. The device comprises a cavity resonator 1 made as described above, a dual-channel frequency converter 7, and a block of function generation that is a signal frequency divider 8. The frequency converter 7 has two channels, 9 and 10. The channel 9 includes a heterodyne generator 11 tuned to the $F_1$ frequency of one resonant oscillation mode of the resonator 1, and a mixer 12 that isolates the difference frequency of its inputs and whose first input is connected to the output of the heterodyne generator 11. The channel 10 includes a heterodyne generator 13 tuned to the $F_2$ frequency of other resonant oscillation mode of the resonator 1, and a mixer 14 that isolates the difference frequency of its inputs and whose first input is connected to the output of the heterodyne generator 13. The resonator 1 is connected to the frequency converter 7 via a coupler 6 that has two elements as described above. One of these elements is tuned to transmit signals of one oscillation mode of the resonator 1 and is connected to the second input of the mixer 12 in the channel 9 of the frequency converter 7 whereas other element is tuned to transmit signals of other oscillation mode of the resonator 1 and is connected to the second input of the mixer 14 in the channel 10 of the frequency converter 7. The frequency divider 8 has two inputs, one of which is connected to the output of the mixer 12 and other is connected to the output of the mixer 14 of the frequency converter 7. The output of the frequency divider 8 is connected to a recording device that is not shown in Fig.2 and can be made similarly to the prototype.

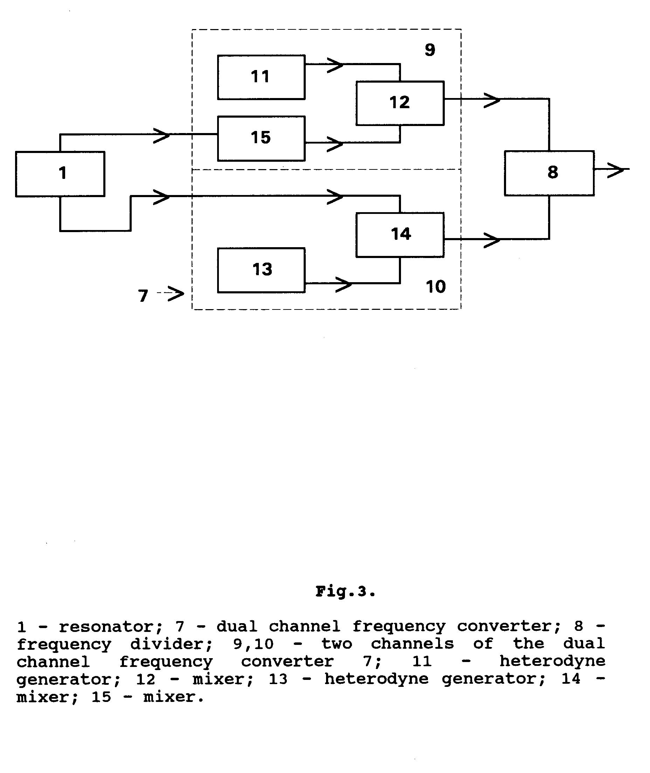

The embodiment of the present device shown in Fig.3 is also designed to measure anisotropy degree. It differs from the embodiment shown in Fig.2 in that the first channel 9 of the frequency converter 7 has an additional mixer 15 that isolates the difference frequency of its inputs and whose output is connected to one input of the mixer 12 whereas the heterodyne generator 11 of the channel 9 is tuned to a frequency that is equal to $F_1$-$F_2$, i.e., the difference of the first and second resonant modes of the resonator 1, and is connected to other input of the mixer 12. Further, the coupler 6 has two elements, one of which is tuned to transmit the signals of both modes of the resonator 1 and is connected to the input of the mixer 15 in the channel 9 of the frequency converter 7, whereas other element is tuned to transmit the signal of the second mode only and is connected to the input of the mixer 14 in the channel 10 of the frequency converter 7.

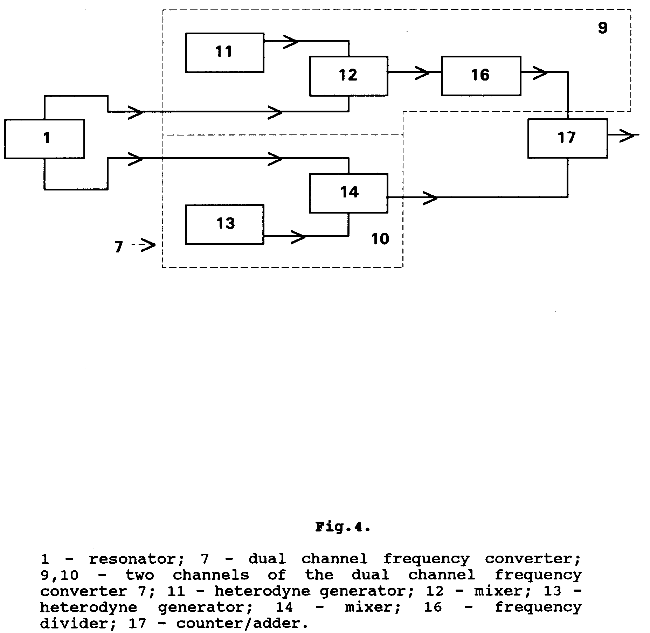

The embodiment of the present device shown in Fig.4 is designed to measure linear density of a material. It is made similarly to that shown in Fig.2 except that the channel 9 of the frequency converter 7 has an additional frequency divider 16 whose input is connected to the output of the mixer 12 whereas the block of function generation represents a counter/adder 17, one input of the latter being connected to the output of the frequency divider 16 and other to the output of the mixer 14.

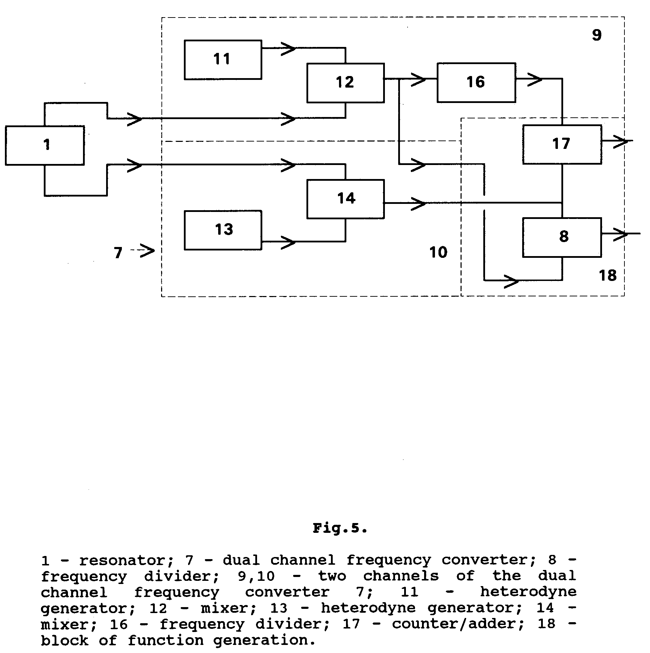

The embodiment of the present device shown in Fig.5 enables one to measure both material's linear density and anisotropy degree. It differs from the embodiment shown in Fig.4 in that its block 18 of function generation comprises additionally the frequency divider 8, one input of the latter being connected to the output of the mixer 12 and other to the output of the mixer 14.

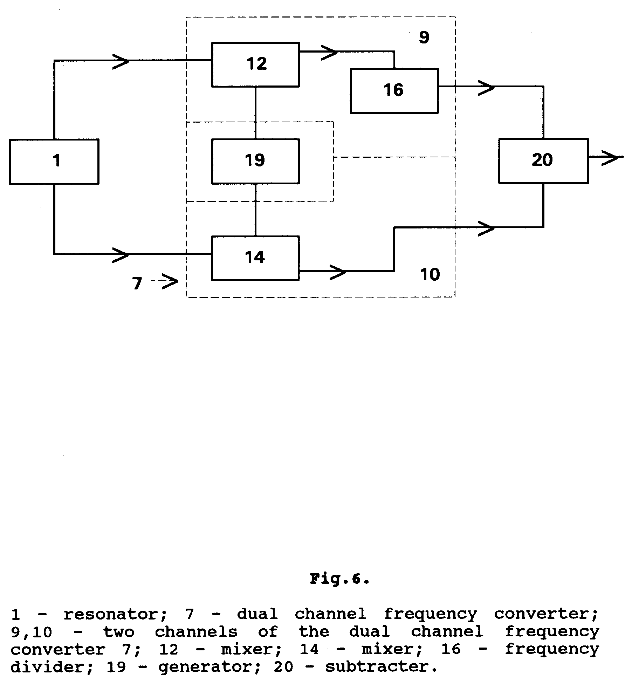

The embodiment of the present device shown in Fig.6 is designed to measure linear density of a material. It differs from the embodiment shown in Fig.4 in that the frequency converter 7 has a dual output generator 19 common for both channels rather than two heterodyne generators. The generator 19 is tuned to a frequency $F_0 = (F_1 + k \cdot F_2)/(1 + k)$, one of its outputs being connected to the input of the mixer 12 and other output to the input of the mixer 14. For this embodiment, the block of function generation is made as a subtracter 20, its one input being connected to the output of the frequency divider 16 and other to the output of the mixer 14 of the channel 10 of the frequency converter 7. An advantage of this embodiment compared to those described above is that instead of two high-frequency generators it comprises one generator which results in simplified circuit and increased stability of the device.

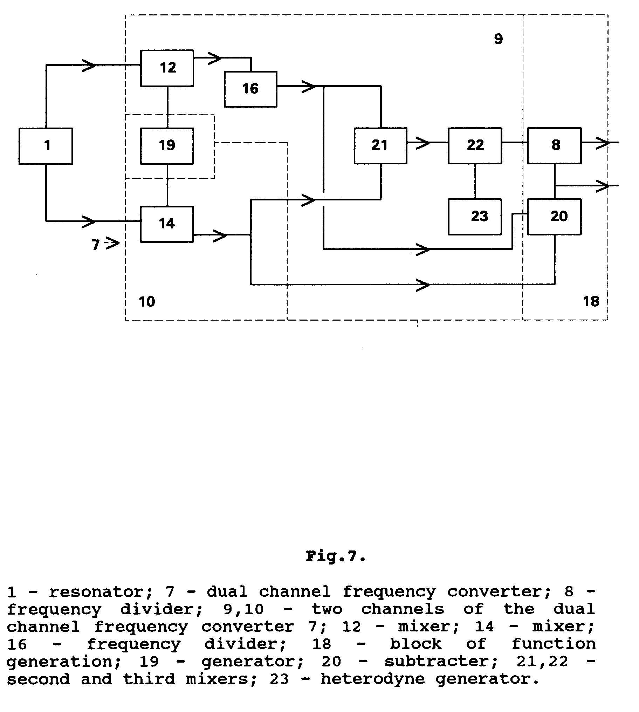

The embodiment of the present device shown in Fig.7 enables one to measure material's linear density and anisotropy degree independently of each other. This device includes the circuit shown in Fig.6. The channel 9 has additional second mixer 21 and third mixer 22 which isolate summary and difference frequencies of their inputs, respectively, as well as a heterodyne generator 23 tuned to a frequency $F = 2 \cdot (F_2 - F_1)/(k + 1)$. In this embodiment, the block of function generation 18 has an additional frequency divider 8. The first input of the second mixer 21 is connected to the output of the frequency divider 16 and its second input is connected to the output of the mixer 14 of the channel 10 of the frequency converter 7 whereas the output of the mixer 21 is connected to the first input of the third mixer 22, the second input of the latter being connected to the output of the heterodyne generator 23. One input of the frequency divider 8 is connected to the output of the third mixer 22 and its other input to the output of the subtracter 20.

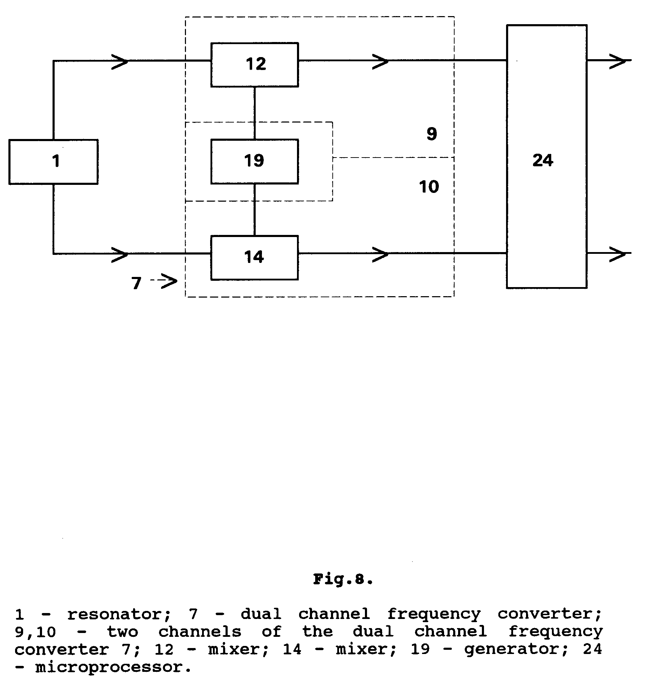

The embodiment of the present invention shown in Fig.8 differs from those described above in that it comprises a microprocessor 24 as a block of function generation, e.g., based on 1802 Series chip (or Intel 8085, or Z80). In this case, the frequency converter 7 has a heterodyne generator 19 that is common for both channels and one mixer per each channel, 12 and 14, these mixers isolating difference frequencies of their respective inputs. The resonator 1 and heterodyne generator 19 are connected to the inputs of the mixers 12 and 14 in a fashion similar to the device shown in Fig.6. The outputs of the mixer's 12 and 14 are connected to the inputs of the microprocessor 24. The heterodyne generator 19 is tuned to a frequency F that is chosen from the conditions $|F-F_1| \leqq F_{mp}$ and $|F-F_2| \leqq F_{mp}$, where $F_{mp}$ is the maximum operating frequency of the microprocessor 24.

The present method is realized with the device shown in Fig.2 as follows. A sample 25 (Fig.1) of the material tested is put into a slot 2 of the resonator 1 in which two oscillation modes are excited with mutually orthogonal electric fields. As for example, the $E_{110}$ mode is excited on the $F_1$ frequency with its electric field oriented along Z axis in a longitudinal direction relative to the material sample whereas the $E_{011}$ mode is excited on the $F_2$ frequency with its electrical field oriented along X axis in a lateral direction relative to the sample. The frequencies $F_1$ and $F_2$ differ from each other by an increment that excludes any coupling between the modes and are determined by resonator dimensions as described above. As a result of interaction of the sample 25 with the electric fields of the resonant modes the frequencies of the latter change by a value. As for example, the $F_1$ frequency of the $E_{110}$ mode decreases by $f_1$ which is in proportion to the dielectric constant along Z axis and linear density of the sample whereas the $F_2$ frequency of the $E_{011}$ mode decreases by $f_2$ which is in proportion to the dielectric constant along X axis and linear density of the sample. The signal of the $E_{110}$ mode with a frequency $(F_1-f_1)$ is transmitted via one element of the coupler 6 to the input of the mixer 12 (Fig.2) in the first channel 9 of the frequency converter 7 while other input of the mixer 12 receives a signal from the heterodyne generator 11 with the $F_1$ frequency. The mixer 12 isolates the $f_1$ difference frequency of its inputs while its output with the $f_1$ frequency is transmitted to the first input of the frequency divider 8. The signal of the $E_{011}$ mode with a frequency $(F_2-f_2)$ is processed similarly in the second channel 10 of the frequency converter 7. As a result, a signal with the $f_2$ frequency is transmitted from the output of the mixer 14 to the second input of the frequency divider 8, the latter dividing the frequencies of its inputs. The $f_1/f_2$ ratio so obtained characterizes anisotropy degree of the sample.

Anisotropy degree is measured with the device shown in Fig.3 in a similar fashion. The difference is in signal processing in the frequency converter 7. As for example, the signals of both oscillation modes are transmitted via an element of the coupler 6 to the input of the mixer 15 in the first channel 9 of the frequency converter 7. The mixer 15 isolates the difference frequency $(F_1-F_2-f_1+f_2)$ of its inputs. The output of the mixer 15 is connected to one of the inputs of the mixer 12 the other input of which receives a signal with the frequency $(F_1-F_2)$ from the heterodyne generator 11. The mixer 12 isolates the difference frequency $(f_2-f_1)$ of its inputs and its output signal with the frequency $(f_2-f_1)$ goes to one of the inputs of the frequency divider 8. Processing of the resonator's second mode signal is carried out in the channel 10 of the frequency converter 7 in the same way as in the channel 10 of the device shown in Fig.2. The resulting signal with the $f_2$ frequency goes from the output of the mixer 14 to the second input of the frequency divider 8. The output signal of the latter is a $(1-f_1/f_2)$ function that characterizes the anisotropy degree of the material tested.

Measuring of the material linear density according to the present method is carried out with a device shown in Fig.4. The signals of both modes which result from the interaction of the material tested with mode electrical fields are processed in similar fashion described above for the device shown in Fig.2. The difference is that the signal with the $f_1$ frequency is transmitted from the output of the mixer 12 to the input of the frequency divider 16 where the signal is divided by the k coefficient. As mentioned above, the k coefficient allows for differences between the electric field distributions for the oscillation modes excited in a resonator. A signal with the $f_1/k$ frequency is transmitted from the output of the frequency divider 16 to one of the inputs of the counter/adder 17 the other input thereof receiving a signal with the $f_2$ frequency from the output of the mixer 14. The output of the counter/adder 17 is a sum $(f_1/k+f_2)$ that characterizes linear

density of the sample tested.

If it is necessary to measure simultaneously linear density and anisotropy degree of material, the present method can be realized with a device shown in Fig.5. In this case the processing of signals of both oscillation modes is carried out in a similar fashion to the device shown in Fig.4. The only difference is that function generation block forms function $(f_1/k + f_2)$ as well as function $f_1/f_2$ The latter is formed with frequency divider 8, the frequency $f_1$ signal being fed to the first input thereof from the output of the mixer 12 , the second input thereof receiving a frequency $f_2$ signal from the mixer 14 output.

Measuring of the material linear density with the device shown in Fig. 6 is carried out in a similar fashion to the device shown in Fig.4. The difference is that a signal with $F_0$ frequency is transmitted from the common heterodyne generator 19 to the second inputs of the mixers 12 and 14. Frequency $F_0 = - (F_1 + k \cdot F_2)/(1 + k)$, it is intermediate between $F_1$ and $F_2$. The signal with difference frequency $(F_0-F_1 + f_1)$ is fed from the output of the mixer 12 to the frequency divider 16 where it is divided by the k coefficient. The resulting signal with frequency $(F_0-F_1 + f_1)/k$ is fed to the first input of the subtracter 20 while the second input thereof receives the signal with the difference frequency $(F_2-f_2-F_0)$ from the output of the mixer 14. The output of the subtracter with frequency $(f_1/k + f_2)$ characterizes linear density of the material tested.

Linear density is measured similarly with a device shown in Fig.7, whereas, to measure anisotropy degree, output of the frequency divider 16 is fed to the first input of the mixer 21, the second input thereof receiving a signal with frequency $(F_2-f_2-F_0)$ from the output of the mixer 14 in the second channel 10 of the frequency converter 7. The mixer 21 isolates summary frequency of its inputs. The resulting signal with frequency $2\cdot(F_2-F_1)/(k + 1) + (f_1/k-f_2)$ goes to one of the inputs of the mixer 22, the other input thereof receiving a signal with frequency $2\cdot(F_2-F_1)/(k + 1)$ from the output of the heterodyne generator 23. The signal of the difference frequency $(f_1/k-f_2)$ from the output of the mixer 22 goes to the first input of the frequency divider 8, the second input thereof receiving a signal with frequency $(f_1/k + f_2)$ from the output of the subtracter 20. The output of the frequency divider 8 is a function $(1-k \cdot f_2/f_1)/(1 + k \cdot f_2/f_1)$ and characterizes anisotropy degree of the dielectric constant of the material tested.

The present method can be realized with a device shown in Fig.8 as follows. With no sample inside the resonator 1, two resonant oscillation modes with frequencies $F_1$ and $F_2$ are excited as was described above. The signal of one of the modes is fed to the input of the mixer 12 and signal of the other mode to the input of the mixer 14. Other inputs of the mixers receive a signal with frequency F from the heterodyne generator 19. The output with frequency $|F_1-F|$ of the mixer 12 goes to the first input of the microprocessor 24 while the output with frequency $|F_2-F|$ of the mixer 14 goes to the other input of the microprocessor 24, these frequency values being storaged in the memory of the latter. Then, a sample of the material tested is put into the resonator 1, and the measurements are repeated. In doing so, a signal with frequency $|F_1-f_1-F|$ is fed from the output of the mixer 12 to the first input of the microprocessor 24, and a signal with frequency $|F_2-f_2-F|$ is fed from the output of the mixer 14 to the second input of the microprocessor 24. The microprocessor 24 isolates frequency shifts $f_1$ and $f_2$ of the resonant oscillation modes or combinations thereof as well as generates any of the above functions $f_1$ and $f_2$ via algorithm similar to that for the devices described above.

In what follows, specific examples of the present method are given.Linear density and anisotropy were measured for dense intermediate products of the cotton manufacture.

Similarly to Fig.1, the resonator was made as a cube with a side of 10 cm. The slot with a width of 5 mm terminates in a round hole 10 mm diameter. To decrease distortions of the field distribution due to the slot, the latter is provided with copper side plates 20 mm in width, these plates representing an evanescent waveguide. The frequencies of the resonant modes $E_{110}$ and $E_{011}$ were near 2.1 GHz and differed by approximately 50 MHz. Notwithstanding presence of the slot, these frequency values coincide essentially with those calculated by the above equations.

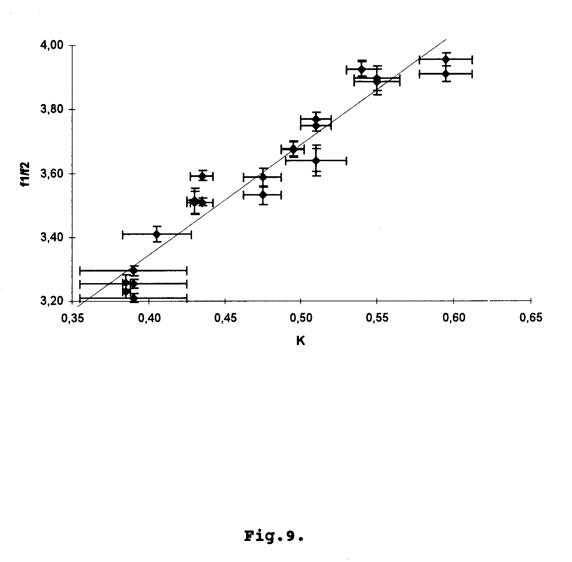

To measure anisotropy of the intermediate products of the cotton manufacture, function $f_1/f_2$ was measured according to Claim 2 of the present method. In Fig.9, the coefficient of fiber relative parallelisation **K** plotted on the abscissa can characterize anisotropy of these products. In practice, this coefficient is measured manually using the Leonteva-Lindsley method (C.H.Lindsley. Textile Research Journal, 1951, v.21, No. 1, p.39; I.S.Leonteva. "Tekhnologiya tekstilnoy promyshlennosti" Journal, 1964, No.2, p 58). The more parallel are fibers, the better are they arranged along the axis of an intermediate product, and the larger is anisotropy of its sample. The values of $f_1/f_2$ obtained with a mock-up of the present device are plotted on the ordinate. Intermediate products of different processes were used for measurements. These products had different values of the fiber parallelisation and linear densities in the range of 3 to 5 ktex. The measurement data fall on a straight line regardless of the linear density. It can be seen that the ratio of the frequency shift, $f_1/f_2$, is in proportion to the coefficient of fiber relative parallelisation, i.e., anisotropy degree of such samples.

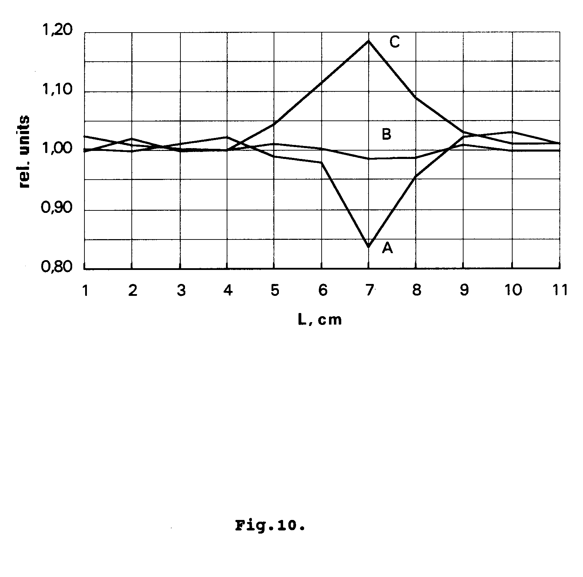

Figure 10 shows the results of simultaneous measurement of the linear density and anisotropy of an intermediate product. Measurements were carried out with a device whose block diagram is shown in Fig.5. The test procedure was as follows. At the beginning, linear density of the cotton sliver with density about 3.57 ktex and the coefficient of fiber parallelisation were measured using the present method, with the spacing along the sliver being 1 cm. For purposes of comparison, linear density of the same sliver section was measured with a contemporary instrument, transducer thereof being a flat condenser with the electric field normal to the sliver plane. Then, the sliver was tightly bound with a filament of artificial fiber with a thickness of approximately 15 mkm. In this way, there was essentially no distortion of sliver linear density, whereas orientation of the fibers along the sliver was decreased substantially near binding, thereby decreasing anisotropy of the sample. After that all these measurements were repeated once more. In Fig.10, the coordinates of the measurement points are plotted on the abscissa. The ordinates of the three curves are ratios of corresponding values for these two successive measurement series. The plot aids the visualization of relative variations in all measured values for controlled variation of the product structure. The A curve indicates decrease in the $f_1/f_2$ ratio by approximately 15 percent at the binding, i.e., some decrease in anisotropy degree for the location. The B curve represents the linear density data measured by the present method. As can be seen, the deviations for the section tested are less than 2 percent. The C curve represents the linear density data measured for the same sliver section by a standard contemporary transducer. The latter recorded a false increase in the linear density, since binding resulted in an increase in fiber areas oriented along electrical field thereby increasing the effective dielectric constant of the material along the axis normal to the sliver plane. The same will take place when measuring the linear density in a similar experiment by the method described for the prototype, since the latter uses only one mode with definite direction of the electric field to measure linear density, and hence responding to a variation in anisotropy degree. Contrary to the known method, the present method provides measuring of the linear density regardless of anisotropy degree for the sliver fibers.

**Claims**

1. A method of measuring properties of anisotropic dielectric materials including accommodation of a sample of the material tested in a cavity microwave resonator, excitation of two resonant oscillation modes with mutually orthogonal electric fields within said resonator in the area of location of said sample, measurement of a function of frequency shifts for said resonant modes of said resonator, said shifts being due to interactions of said modes with the material tested, and determination of properties of the material from said shift, characterized in that said resonant oscillation modes are excited on different frequencies chosen to exclude any coupling between said frequencies, and that a single-valued function of the ratio and(or) sum of said shifts is measured as said function of said frequency shifts for said resonant oscillation modes.

2. A method as claimed in Claim 1, characterized in that a value of $f_1/f_2$ is measured as said ratio function of said frequency shifts for said resonant oscillation modes, where $f_1$ and $f_2$ are said frequency shifts for the first and second resonant oscillation modes of said resonator, respectively.

3. A method as claimed in Claim 1, characterized in that a value of $(1-f_1/f_2)$ is measured as said ratio function of said frequency shifts for said resonant oscillation modes.

4. A method as claimed in Claim 1, characterized in that a value of $(f_1/k+f_2)$ is measured as said sum function of said frequency shifts for said resonant oscillation modes, where k is a coefficient depending on relative filling of the electric fields of said resonant oscillation modes with the material tested.

5. A method as claimed in Claim 4, characterized in that a value of $(1-k \cdot f_2/f_1)/(1+k \cdot f_2/f_1)$ is measured additionally as said ratio function of said frequency shifts for said resonant oscillation modes.

6. A device to measure properties of an anisotropic dielectric material comprising a measuring cell made as a cavity microwave resonator which can excite two mutually orthogonal resonant oscillation modes, a coupler which can transmit signal of said two oscillation modes of said resonator and is connected to the output thereof, a block of function generation for frequency shifts of said modes, and connected to the output thereof a recording device, characterized in that said cavity microwave resonator can excite each said resonant oscillation mode on a frequency which differs from the frequency of other said resonant mode, and that a dual channel frequency converter is connected between the output of said coupler and the input of said block of function generation.

7. A device as claimed in Claim 6, characterized in that each channel of said frequency converter contains a heterodyne generator tuned to a frequency of corresponding said resonant oscillation mode of said resonator, and a mixer isolating the difference frequency of inputs thereof and connecting its first input to the output of said heterodyne generator, said coupler comprising two coupling elements, one of the latter is tuned to transmit signals of one of said oscillation modes and connected to the second input of a mixer in one said channel while other said element is tuned to transmit signals of other said oscillation mode and connected to the second input of a mixer in other said channel, and said block of function generation is made as a frequency divider with two inputs one of which is connected to the output of said mixer in one said channel and other is connected to the output of said mixer in other said channel of said frequency converter.

8. A device as claimed in Claim 6, characterized in that said first channel of said frequency converter contains a first and second mixers which are connected in series to each other and isolate the difference frequency of their inputs, and a first heterodyne generator tuned to the frequency equal to the difference between the frequencies of said first and second resonant oscillation modes, the output of said first heterodyne generator being connected to the second input of said second mixer, and a third mixer in said second channel of said frequency converter, said mixer isolating the difference frequency of inputs thereof, and a second heterodyne generator tuned to the frequency of said second resonant oscillation mode, the output of said second heterodyne generator being connected to the first input of said third mixer while said coupler contains two coupling elements one of which is tuned to transmit signals of both said oscillation modes and connected to the input of said first mixer while other is tuned to transmit signal of said second oscillation mode and connected to the second input of said third mixer, said block of function generation is made as a frequency divider with two inputs one of which is connected to the output of said second mixer and other to the output of said third mixer of said frequency converter.

9. A device as claimed in Claim 6, characterized in that said first channel of said frequency converter contains a mixer isolating the difference frequency of inputs thereof, a heterodyne generator tuned to the frequency of one of said resonant oscillation modes, the output of said heterodyne generator being connected to the first input of said mixer, a frequency divider, input thereof being connected to the output of said mixer, a mixer in said second channel of said frequency converter, said second mixer isolating the difference frequency of inputs thereof, a heterodyne generator tuned to the frequency of other said resonant oscillation mode, the output of said second heterodyne generator being connected to the first input of said second mixer, said coupler contains two coupling elements one of which is tuned to transmit signals of one of said resonant oscillation mode and connected to the second input of said mixer of said first channel while other element is tuned to transmit signals of other said resonant oscillation mode and connected to the second input of said mixer of said second channel of said frequency converter, said block of function generation contains a counter/adder with two inputs, one of the latter being connected to the output of said frequency divider and other to the output of said mixer of said second channel of said frequency converter.

10. A device as claimed in Claim 9, characterized in that said block of function generation contains additionally a frequency divider with two inputs one of the latter being connected to the output of said mixer of said first channel and other to the output of said mixer of said second channel of said frequency converter.

11. A device as claimed in Claim 6, characterized in that said dual channel frequency converter contains a heterodyne generator common to both channels of said converter, said heterodyne generator has two outputs and is tuned to frequency $F_0 = (F_1 + k \cdot F_2)/(1 + k)$, the first channel of said frequency converter has a mixer isolating the difference frequency of its inputs and a frequency divider connected to said mixer in series, while the second channel of said frequency converter has a mixer isolating the difference frequency of its inputs, said coupler contains two coupling elements one of which is tuned to transmit signals of one of said resonant oscillation modes and connected to the first input of said mixer of said first channel, the second input of said mixer being connected to the first output of said common heterodyne generator while other coupling element is tuned to transmit signals of other said resonant oscillation mode and is connected to the first input of said mixer of said second channel, with the second input of said mixer being connected to the second output of said common heterodyne generator, said block of function generation contains a subtracter one input thereof being connected to the output of said frequency divider and other input to the output of said mixer of said second channel of said frequency converter.

**12.** A device as claimed in Claim 11, characterized in that said first channel of said frequency converter contains additionally a second and a third mixers isolating summary and difference frequencies of their inputs, respectively, and a heterodyne generator tuned to frequency $F = 2 \cdot (F_2 - F_1)/(k+1)$, said block of function generation contains an additional frequency divider, with the first input of the second mixer being connected to the output of said frequency divider and the second input to the output of said mixer of the second channel of said frequency converter and the output of the second mixer being connected to the first input of said third mixer, the second input of the latter being connected to the output of said heterodyne generator in the first channel of said frequency converter, one of inputs of said frequency divider is connected to the output of said third mixer while the other input to the output of said subtracter.

**13.** A device as claimed in Claim 6, characterized in that said dual channel frequency converter contains a heterodyne generator common to both channels of said converter, said heterodyne generator has two outputs, each channel of said frequency converter contains a mixer isolating the difference frequency of its respective inputs, said coupling device contains two coupling elements one of which is tuned to transmit signals of one of said resonant oscillation modes and connected to the first input of said mixer of one channel, the second input of said mixer is connected to the first output of said heterodyne generator, said other coupling element is tuned to transmit signals of other said oscillation mode and connected to the first input of said mixer of said other channel, the second input of said mixer being connected to the second output of said heterodyne generator, said block of function generation is made as microprocessor with two inputs one of which is connected to the output of said mixer of one said channel and other to the output of said mixer of other said channel of said frequency converter.

Fig.1.

**Fig.2.**

1 - resonator; 7 - dual channel frequency converter; 8 - frequency divider; 9,10 - two channels of the dual channel frequency converter 7; 11 - heterodyne generator; 12 - mixer; 13 - heterodyne generator; 14 - mixer.

**Fig.3.**

1 - resonator; 7 - dual channel frequency converter; 8 - frequency divider; 9,10 - two channels of the dual channel frequency converter 7; 11 - heterodyne generator; 12 - mixer; 13 - heterodyne generator; 14 - mixer; 15 - mixer.

**Fig.4.**

1 - resonator; 7 - dual channel frequency converter; 9,10 - two channels of the dual channel frequency converter 7; 11 - heterodyne generator; 12 - mixer; 13 - heterodyne generator; 14 - mixer; 16 - frequency divider; 17 - counter/adder.

**Fig.5.**

1 - resonator; 7 - dual channel frequency converter; 8 -
frequency divider; 9,10 - two channels of the dual
channel frequency converter 7; 11 - heterodyne
generator; 12 - mixer; 13 - heterodyne generator; 14 -
mixer; 16 - frequency divider; 17 - counter/adder; 18 -
block of function generation.

**Fig.6.**

1 - resonator; 7 - dual channel frequency converter; 9,10 - two channels of the dual channel frequency converter 7; 12 - mixer; 14 - mixer; 16 - frequency divider; 19 - generator; 20 - subtracter.

EP 0 665 426 A1

**Fig.7.**

1 - resonator; 7 - dual channel frequency converter; 8 -
frequency divider; 9,10 - two channels of the dual
channel frequency converter 7; 12 - mixer; 14 - mixer;
16 - frequency divider; 18 - block of function
generation; 19 - generator; 20 - subtracter; 21,22 -
second and third mixers; 23 - heterodyne generator.

17

**Fig.8.**

1 - resonator; 7 - dual channel frequency converter;
9,10 - two channels of the dual channel frequency
converter 7; 12 - mixer; 14 - mixer; 19 - generator; 24
- microprocessor.

Fig.9.

Fig.10.

European Patent Office

**EUROPEAN SEARCH REPORT**

Application Number

EP 95 10 0319

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A,D | EP-A-0 372 992 (E. I. DU PONT DE NEMOURS AND CO.)<br>* the whole document *<br>--- | 1,6 | G01N22/00 |
| A | US-A-3 581 190 (I. MCLAREN BROWN)<br>* abstract *<br>--- | 6 | |
| A | EP-A-0 177 011 (KANZAKI PAPER MANUFACTURING CO. LTD.)<br>* abstract *<br>--- | 1 | |
| A | US-A-3 458 808 (N. B. AGDUR)<br>* column 1, line 27 - line 36 *<br>--- | 6 | |
| A | DATABASE WPI<br>Week 9335 20 October 1993<br>Derwent Publications Ltd., London, GB;<br>AN 93-279795<br>& SU-A-1 758 531 (AS USSR RADIO ELTRN INST) , 30 August 1992<br>* abstract *<br>----- | 1 | TECHNICAL FIELDS SEARCHED (Int.Cl.6)<br><br>G01N<br>G01R<br>H01P |

The present search report has been drawn up for all claims

| Place of search | Date of completion of the search | Examiner |
|---|---|---|
| BERLIN | 8 May 1995 | Brison, O |